# EUROPÄISCHE PATENTSCHRIFT

(11) **EP 2 103 845 B1**
(45) Veröffentlichungstag und Bekanntmachung des Hinweises auf die Patenterteilung: **18.07.2012**
(21) Anmeldenummer: 09152518.8
(22) Anmeldetag: 11.02.2009
(51) Int. Cl.: B60W 10/06, B60W 30/16, B60W 10/10, B60W 30/18

(54) **Verfahren zur Schaltsteuerung eines automatisierten Stufenschaltgetriebes**
Method for controlling the shifting of an automated variable speed transmission
Procédé de commande de changement de vitesse d'une boîte de vitesses automatisée

(30) Priorität: 19.03.2008 DE 102008000747
(43) Veröffentlichungstag der Anmeldung: 23.09.2009
(73) Patentinhaber: ZF Friedrichshafen AG, 88038 Friedrichshafen (DE)
(72) Erfinder: Wolfgang, Werner, 88313 Ravensburg (DE); Würthner, Maik, Dr., 88048 Friedrichshafen (DE)

(56) Entgegenhaltungen:
- EP-A1- 1 248 021
- DE-A1- 10 115 052
- DE-A1-102004 025 741
- US-A- 6 076 622

## Beschreibung

Die Erfindung betrifft ein Verfahren zur Schaltsteuerung eines automatisierten Stufenschaltgetriebes, das innerhalb eines Antriebsstrangs eines Kraftfahrzeugs, beispielsweise eines Nutzfahrzeugs, im Kraftfluss zwischen einem Antriebsmotor und einem Achsantrieb einer Antriebsachse oder einem Vertellergetriebe angeordnet ist, und dessen Schaltvorgänge in Abhängigkeit von Betriebsparametern sowie von Steuerungseingriffen eines in einem Geschwindigkeitsregelmodus und in einem Abstandsregelmodus betreibbaren Abstandsregeltempomaten (ACC-System) in den Antriebsmotor und in Bremseinrichtungen des Kraftfahrzeugs gesteuert werden, wobei zur Ansteuerung des Stufenschaltgetriebes bei Vorliegen zumindest eines bestimmten Betriebszustands eine von der Drehmomentanforderung (M_{M_Soll}) des ACC-Systems an den Antriebsmotor abweichende Drehmomentanforderung (M_{M_mod}) verwendet wird.

Bei einem Kraftfahrzeug, das mit einem automatisierten Stufenschaltgetriebe, wie einem automatisierten Schaltgetriebe, einem automatisierten Doppelkupplungsgetriebe oder einem Wandler-Automatgetriebe ausgerüstet ist, werden Schaltvorgänge im Normalbetrieb, also in einem allein durch Steuerungseingriffe des Fahrers, insbesondere durch die Auslenkung des Fahrpedals, bestimmten Fahrbetrieb, in Abhängigkeit von sensorisch erfassten oder aus Sensordaten berechneten Betriebsparametern, wie der aktuellen Fahrgeschwindigkeit, dem aktuellen Fahrwiderstand, dem aktuellen Motordrehmoment (M_{M_Ist}) und der aktuellen Drehzahl des Antriebsmotors sowie der durch die aktuelle Auslenkung des Fahrpedals von dem Fahrer bestimmten Leistungsanforderung anhand von in einem Datenspeicher des zugeordneten Getriebesteuergerätes abgespeicherten Schaltkennlinien gesteuert.

Zur Entlastung des Fahrers sind jedoch schon seit geraumer Zeit als Tempomat oder CC-System (CC = Cruise Control) bezeichnete Fahrerassistenzsysteme bekannt, die das automatische Einhalten einer von dem Fahrer an einer Bedienungseinheit einstellbaren Fahrgeschwindigkeit ermöglichen. In den letzten Jahren wurden derartige Fahrerassistenzsysteme noch um eine Abstandsregelfunktion erweitert und dadurch zu Abstandsregeltempomaten oder ACC-Systemen (ACC = Adaptive Cruise Control) weiterentwickelt.

Bei eingeschaltetem ACC-System ist zunächst ein Geschwindigkeitsregelmodus aktiv, solange der Fahrbahnbereich vor dem eigenen Kraftfahrzeug frei von anderen Fahrzeugen ist. Im Geschwindigkeitsregelmodus werden der Antriebsmotor und vorhandene Dauerbremseinrichtungen, wie eine Motorbremse und eine beispielsweise als Retarder ausgebildete Dauerbremse, derart angesteuert, dass eine von dem Fahrer vorgegebene Sollgeschwindigkeit weitgehend eingehalten wird. Mittels einer Sensoreinrichtung, die bevorzugt mindestens einen Radarsensor aufweist, wird permanent der Bereich vor dem eigenen Kraftfahrzeug überwacht, vorausfahrende Fahrzeuge erkannt, und deren Fahrtrichtung, Entfernung sowie Relativgeschwindigkeit ermittelt.

Bei einer Annäherung an ein in der eigenen Fahrspur langsamer vorausfahrendes Fahrzeug wird ein Abstandsregelmodus des ACC-Systems aktiviert, in dem eine Sollverzögerung berechnet wird, die erforderlich ist, um dem vorausfahrenden Fahrzeug in einem von dem Fahrer zuvor an der Bedienungseinheit eingebbaren Abstand zu folgen. Zur Einstellung der Sollverzögerung werden der Antriebsmotor, die Dauerbremseinrichtungen, und, sofern erforderlich, auch die Betriebsbremse des Kraftfahrzeugs entsprechend angesteuert, so dass der vorgegebene Abstand zu dem vorausfahrenden Fahrzeug weitgehend eingehalten wird. Danach folgt das eigene Kraftfahrzeug durch eine entsprechende Ansteuerung des Antriebsmotors, der Dauerbremsen und der Betriebsbremse dem vorausfahrenden Fahrzeug in dem vorgegebenen Abstand. Wenn sich das vorausfahrende Fahrzeug entfernt, also abbiegt oder über die Sollgeschwindigkeit hinaus beschleunigt, geht das ACC-System wieder in den Geschwindigkeitsregelmodus (Tempomatbetrieb) über. Außer durch eine manuelle Abschaltung des ACC-Systems kann dieses auch durch Steuerungseingriffe des Fahrers, wie eine die aktuelle Leistungseinstellung des Antriebsmotors übersteuernde Betätigung des Fahrpedals, eine deutliche Betätigung des Bremspedals, und eine zum Verlassen der Fahrspur führende Lenkbewegung, zumindest vorübergehend deaktiviert werden.

Die Steuerung eines Stufenschaltgetriebes, d.h. die Bestimmung des jeweiligen Zielgangs oder Gangsprungs und der zugeordneten Schalt- oder Zieldrehzahl zur Auslösung von Hoch- und Rückschaltungen, erfolgt im Geschwindigkeitsregelmodus sowie im Abstandsregelmodus nur indirekt in Abhängigkeit von der Geschwindigkeitsregelung oder der Abstandsregelung des ACC-Systems, nämlich als Funktion der aktuellen Drehmomentanforderung (M_{M_Soll}) an den Antriebsmotor und weiterer über Steuerungs- oder Regelungseingriffe des ACC-Systems beeinflusster Betriebsparameter.

Dabei hat sich schon bei nur einen Geschwindigkeitsregelmodus aufweisenden CC-Systemen gezeigt, dass in bestimmten Betriebssituationen die Verwendung der jeweiligen Drehmomentanforderung (M_{M_Soll}) an den Antriebsmotor zur Ansteuerung des Stufenschaltgetriebes ungünstig ist, da hierdurch bei hoher Geschwindigkeitsdifferenz (Δv = v_{Soll} - v_{Ist}) zwischen der Sollgeschwindigkeit (v_{Soll}) und der aktuellen Istgeschwindigkeit (v_{Ist}) unnötige Zugrückschaltungen und bei geringer Geschwindigkeitsdifferenz (Δv) unnötige Pendelschaltungen, d.h. wiederholte Hoch- und Rückschaltungen, ausgelöst werden können. Diese unnötigen Schaltvorgänge führen nachteilig zu einem erhöhten Kraftstoffverbrauch, zu erhöhtem Verschleiß an den Schaltelementen und zu einer Verschlechterung des Fahrkomforts des betreffenden Kraftfahrzeugs.

Zur Vermeidung unnötiger Zugrückschaltungen wird z.B. in der DE 101 15 052 A1 ein Verfahren vorgeschlagen, gemäß dem im Zugbetrieb die Drehmomentanforderung (M_{M_Soll} > 0) eines ACC-Systems zur Steuerung des Antriebsmotors bei aktiviertem Geschwindigkeits- oder Abstandsregelmodus für die Ansteuerung des zugeordneten Stufenschaltgetriebes generell, beispielsweise auf einen Wert von 80%, zu beschränken (M_{M_mod} = 0,8 * M_{M_Soll}), und diese Beschränkung nur unter bestimmten Betriebsbedingungen aufzuheben. Die Aufhebung dieser Beschränkung ist dann vorgesehen, wenn die Differenz (ΔM = M_{M_Soll} - M_{M_Ist}) zwischen der Drehmomentanforderung (M_{M_Soll}) und dem aktuellen Istmoment (M_{M_Ist}) des Antriebsmotors einen ersten Grenzwert überschreitet, und/oder wenn das aktuelle Istmoment (M_{M_Ist}) einen nahe dem Maximalmoment (M_{M_max}) des Antriebsmotors liegenden zweiten Grenzwert überschreitet. Eine gegebenenfalls erforderliche hohe Beschleunigung des Kraftfahrzeugs soll mit diesem bekannten Verfahren dennoch möglich sein.

Ein weiteres Problem kann bei aktiviertem Abstandsregelmodus dann auftreten, wenn zur Vermeidung einer gefährlichen Annäherung an ein langsamer vorausfahrendes Fahrzeug die Betriebsbremse betätigt wird, und wenn dieser Bremseingriff der Getriebesteuerung nicht zugänglich gemacht wird. In diesem Fall wird der Fahrwiderstand irrtümlich um das Bremsmoment der Betriebsbremse zu groß bestimmt, was zu unnötigen Schubrückschaltungen bei zu hohen Schaltdrehzahlen führen kann.

Der vorliegenden Erfindung liegt daher die Aufgabe zugrunde, ein Verfahren zur Steuerung eines automatisierten Stufenschaltgetriebes der eingangs genannten Art vorzustellen, mit dem das Schaltverhalten des Stufenschaltgetriebes bei aktiviertem Geschwindigkeits- oder Abstandsregelmodus eines Abstandsregeltempomaten (ACC-System) im Hinblick auf einen geringeren Kraftstoffverbrauch, einen niedrigeren Verschleiß und einen erhöhten Fahrkomfort verbessert werden kann.

Diese Aufgabe ist durch ein Verfahren mit den Merkmalen des Hauptanspruchs gelöst, während vorteilhafte Weiterbildungen dieses Verfahrens den Unteransprüchen entnehmbar sind.

Demnach geht die Erfindung aus von einem Verfahren zur Schaltsteuerung eines automatisierten Stufenschaltgetriebes, das innerhalb eines Antriebsstrangs eines Kraftfahrzeugs, beispielsweise eines Nutzfahrzeugs, im Kraftfluss zwischen einem Antriebsmotor und einem Achsantrieb einer Antriebsachse oder einem Verteilergetriebe angeordnet ist, und dessen Schaltvorgänge in Abhängigkeit von Betriebsparametern sowie von Steuerungseingriffen eines in einem Geschwindigkeitsregelmodus und in einem Abstandsregelmodus betreibbaren Abstandsregeltempomaten (ACC-System) in den Antriebsmotor und in Bremseinrichtungen des Kraftfahrzeugs gesteuert werden, wobei zur Ansteuerung des Stufenschaltgetriebes bei Vorliegen zumindest eines bestimmten Betriebszustands eine von der Drehmomentanforderung (M_{M_Soll}) des ACC-Systems an den Antriebsmotor abweichende Drehmomentanforderung (M_{M_mod}) verwendet wird. Weiter ist bei diesem Verfahren vorgesehen, dass der momentan aktivierte Betriebsmodus des Abstandsregeltempomaten (ACC-System) und die Lastrichtung der Drehmomentanforderung des ACC-Systems an den Antriebsmotor (M_{M_Soll} > 0; M_{M_Soll} < 0) ermittelt werden, und dass die zur Ansteuerung des Stufenschaltgetriebes verwendete Drehmomentanforderung (M_{M_mod}) bei aktiviertem Geschwindigkeits- oder Abstandsregelmodus in Abhängigkeit von dem Betriebsmodus (Geschwindigkeits-oder Abstandsregelmodus) und der Lastrichtung (Zugbetrieb oder Schubbetrieb) der Drehmomentanforderung bestimmt wird.

Der Antriebsmotor kann beispielsweise als Verbrennungsmotor oder Elektromotor ausgebildet sein. Unter dem Antriebsmotor soll hier sowohl ein einzelner Antriebsmotor verstanden werden können, als auch eine Anordnung von mehreren Antriebsmotoren, welche als Hybridantrieb mit der Eingangswelle des automatisierten Stufenschaltgetriebes mittelbar oder unmittelbar in Verbindung stehen. Der Hybridantrieb kann beispielsweise einen Verbrennungsmotor und einen Elektromotor umfassen, welche einzeln oder gemeinsam als Antriebsmotor betrieben werden können. Zwischen dem Verbrennungsmotor und dem Elektromotor kann eine Kupplung angeordnet sein, die dann, wenn der Antriebsstrang ausschließlich durch den Elektromotor betrieben wird, geöffnet ist.

Steht das automatisierte Stufenschaltgetriebe mittelbar mit dem Antriebsmotor in Verbindung, so kann zwischen dem Stufenschaltgetriebe und dem Antriebsmotor mindestens eine Kupplung angeordnet sein, beispielsweise eine steuerbare Reibungskupplung.

Im Sinne der hier vorliegenden Erfindung sollen unter dem Begriff "automatisiertes Stufenschaltgetriebe" alle Getriebe mit einem automatisierten Gangwechsel oder einem automatischen Gangwechsel verstanden werden, wie beispielsweise automatisierte Schaltgetriebe, Lastschaltgetriebe, Doppelkupplungsgetriebe und Stufenautomatgetriebe.

Es können sich prinzipiell vier unterschiedliche Methoden zur Ermittlung der für die Ansteuerung des Stufenschaltgetriebes verwendeten Drehmomentanforderung (M_{M_mod}) ergeben, wodurch das Schaltverhalten des Stufenschaltgetriebes im Hinblick auf einen geringeren Kraftstoffverbrauch, einen niedrigeren Verschleiß und einen erhöhten Fahrkomfort des betreffenden Kraftfahrzeugs optimal an die jeweilige Betriebssituation angepasst werden kann.

So wird die zur Ansteuerung des Stufenschaltgetriebes verwendete Drehmomentanforderung M_{M_mod} bei aktiviertem Geschwindigkeitsregelmodus im Zugbetrieb (M_{M_Soll} > 0) zweckmäßig mittels einer Funktion F₁(Δv) in Abhängigkeit der Geschwindigkeitsdifferenz (Δv = v_{Soll} - v_{Ist}) zwischen der in dem ACC-System eingestellten Sollgeschwindigkeit v_{Soll} und der aktuellen Istgeschwindigkeit v_{Ist} des Kraftfahrzeugs bestimmt, wobei diese Funktion F₁(Δv) proportional mit der Geschwindigkeitsdifferenz Δu ansteigt. Hierdurch werden unnötige Zugrückschaltungen beim Auftreten einer kleinen Geschwindigkeitsdifferenz (Δu = v_{Soll} - v_{Ist}) vermieden, jedoch das zügige Erreichen der Sollgeschwindigkeit v_{Soll} beim Auftreten einer großen Geschwindigkeitsdifferenz Δv, die vorwiegend beim Einschalten des Abstandsregeltempomaten mit einer Einstellung einer erhöhten Sollgeschwindigkeit v_{Soll} auftritt, ermöglicht.

Dagegen wird bei aktiviertem Abstandsregelmodus die zur Ansteuerung des Stufenschaltgetriebes verwendete Drehmomentanforderung M_{M_mod} im Zugbetrieb (M_{M_Soll} > 0) bevorzugt aus der mittels einer Filterfunktion F_{Filter}(t) zeitlich begrenzt abgeschwächten Drehmomentanforderung M_{M_Soll} an den Antriebsmotor bestimmt (M_{M_mod} = F_{Filter}(t) * M_{M_soll}). Hierdurch wird einerseits eine schnelle Schaltreaktion zur Einhaltung des vorgegebenen Abstands zu dem vorausfahrenden Fahrzeug ermöglicht, zugleich aber durch ein Übersteuern der Abstandsregelung verursachte Pendelschaltungen vermieden.

Wenn sich das Kraftfahrzeug im Schubbetrieb (M_{M_Soll} < 0) befindet, kann die zur Ansteuerung des Stufenschaltgetriebes verwendete Drehmomentanforderung M_{M_mod} im Geschwindigkeitsmodus und im Abstandsregelmodus jeweils auf die gleiche Art und Weise bestimmt werden, indem ein fiktiver Wunschschub (M_{M_mod} < 0) in Abhängigkeit der Drehmomentanforderung (M_{M_Soll} < 0) an den Antriebsmotor und der betätigten Bremseinrichtungen (M_{Br_Mot} < 0, M_{Br_Ret} < 0, M_{Br_Rad} < 0) bestimmt wird (M_{M_mod} = F₂(M_{M_Soll}, M_{Br_Mot}, M_{Br_Ret}, M_{Br_Rad}). Das konkrete Schaltverhalten des Stufenschaltgetriebes im Schubbetrieb wird dabei jeweils durch die Anpassung der entsprechenden Schalt- und Zieldrehzahlen an spezifische Anforderungen der Fahrzeughersteller bestimmt.

Schubhochschaltungen werden üblicherweise nur als Motorschutzschaltung durchgeführt, um einen durch Überdrehzahlen bedingten Motorschaden zu vermeiden. Zur weiteren Verringerung des Kraftstoffverbrauchs ist es jedoch auch vorteilhaft, dass bei aktiviertem Geschwindigkeits- oder Abstandsregelmodus im Schubbetrieb (M_{M_Soll} < 0) zusätzlich der Steigungswiderstand erfasst und daraus der Gradient des Steigungswiderstands berechnet wird, und dass bei einer Ermittlung eines Gefälleauslaufs schon vor dem Übergang in den Zugbetrieb eine Schubhochschaltung durchgeführt wird.

Eine weitere Verringerung des Kraftstoffverbrauchs und eine Verbesserung des Fahrkomforts sind dadurch zu erzielen, dass bei aktiviertem Abstandsregelmodus im Zug- oder Schubbetrieb (M_{M_Soll} > 0, M_{M_Soll} < 0) zusätzlich der Abstand zu dem vorausfahrenden Fahrzeug erfasst und daraus der zeitliche Gradient des Abstands berechnet wird, und dass bei einer Ermittlung einer Abstandsvergrößerung (z.B. Zurückfallen des eigenen Kraftfahrzeugs) eine Zug- oder Schubhochschaltung durchgeführt wird.

Da zur Ermittlung der jeweils optimalen Gangstufe als wesentlicher Steuerungsparameter permanent der aktuelle Fahrwiderstand bestimmt wird, stellt die automatische Betätigung der Betriebsbremse, d.h. der Radbremsen, durch das ACC-System, die bei aktiviertem Abstandsregelmodus im Schubbetrieb erfolgen kann, generell ein Problem dar, da die Getriebesteuerung ohne die Kenntnis der Bremsbetätigung den Fahrwiderstand irrtümlich um das Bremsmoment der Betriebsbremse zu groß bestimmt, welches zu entsprechenden Fehlreaktionen im Schaltverhalten des Stufenschaltgetriebes führen kann. Im Gegensatz dazu sind die durch eine automatische Betätigung einer Motorbremse, die in Form einer steuerbaren Abgasklappe und/oder einer speziellen Ansteuerung der Auslassventile des Antriebsmotors ausgebildet sein kann, und durch eine automatische Betätigung einer z.B. als Retarder ausgebildeten Dauerbremse erzeugten Bremsmomente M_{Br_Mot}, M_{Br_Ret} jeweils aus den betreffenden Steuergeräten bzw. deren Steuersignalen bekannt und werden bei der Ermittlung des Fahrwiderstands berücksichtigt.

Zur Vermeidung einer fehlerhaften Bestimmung des aktuellen Fahrwiderstands ist es daher zweckmäßig, dass bei aktiviertem Abstandsregelmodus im Schubbetrieb (M_{M_Soll} < 0) eine automatische Betätigung der Betriebsbremse durch das ACC-System zumindest qualitativ sensorisch erfasst wird, und dass bei einer festgestellten derartigen Bremsbetätigung die Ermittlung des Fahrwiderstands für die Dauer dieser Bremsbetätigung eingefroren b zw. nicht durchgeführt wird.

Eine diesbezügliche Verbesserung ist jedoch dadurch erzielbar, dass bei aktiviertem Abstandsregelmodus im Schubbetrieb (M_{M_Soll} < 0) eine automatische Betätigung der Betriebsbremse durch das ACC-System mittels jeweils eines Bremsdrucksensors an jedem der gebremsten Räder sowie ein Solobetrieb oder Anhängerbetrieb des Fahrzeugs erfasst wird, und dass bei erkanntem Solobetrieb das Bremsmoment der Betriebsbremse M_{Br_Rad} aus den Bremsdrücken (p_{Br_Rad} > 0) berechnet und damit der aktuelle Fahrwiderstand berechnet wird, wogegen bei erkanntem Anhängerbetrieb die Ermittlung des Fahrwiderstands für die Dauer der Bremsbetätigung eingestellt bzw. eingefroren wird. Da moderne Nutzfahrzeuge, wie Pritschen-Lastkraftwagen und Sattelzugmaschinen, vielfach schon mit Bremsdrucksensoren ausgerüstet sind, die entsprechenden Anhänger und Sattelauflieger dagegen nicht, kann das Bremsmoment M_{Br_Rad} der Betriebsbremse im Solobetrieb relativ genau aus den Bremsdrücken p_{Br_Rad} berechnet werden. Ob ein Solbetrieb oder ein Anhängerbetrieb vorliegt, wird ohnehin anhand der Belegung der entsprechenden elektrischen Steckdose am Fahrzeug erfasst.

Bei dem erfindungsgemäßen Verfahren zur Schaltsteuerung des Stufenschaltgetriebes wird zur Vermeidung eines zusätzlichen apparativen Aufwands zweckmäßig nur auf Sensor- und Steuerungsdaten zurückgegriffen, die im Datenbussystem des Antriebsstrangs ohnehin standardisiert verfügbar sind, d.h. bei einem entsprechend ausgerüsteten Nutzfahrzeug üblicherweise in einem CAN-Bussystem im SAE J1939-Protokoll zur Verfügung stehen.

Zur weiteren Erläuterung der Erfindung ist der Beschreibung eine Zeichnung beigefügt. In diesen zeigt
- Fig. 1: einen Signalflussplan zur Erläuterung der Steuerungs- und Wirkzusammenhänge in dem Antriebsstrang eines mit einem automatisierten Stufenschaltgetriebe und einem Abstandsregeltempomaten ausgerüsteten Kraftfahrzeugs,
- Fig. 2: eine Tabelle mit relevanten Fahrsituationen eines Kraftfahrzeugs bei aktiviertem Abstandsregelmodus des ACC-Systems im Zugbetrieb, und
- Fig. 3: eine Tabelle mit relevanten Fahrsituationen eines Kraftfahrzeugs bei aktiviertem Abstandsregelmodus des ACC-Systems im Schubbetrieb.

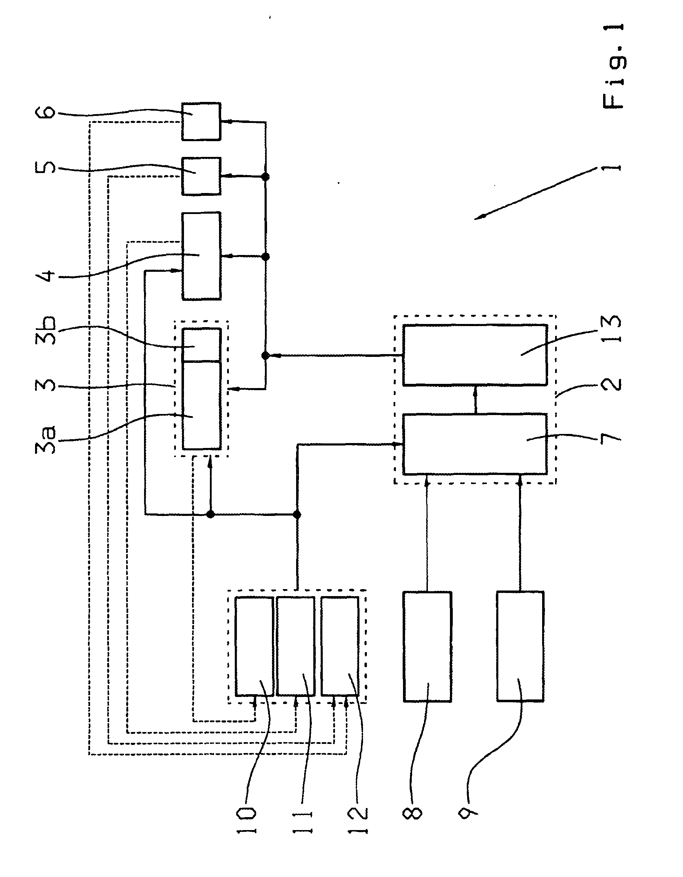

Eine Steuerungseinrichtung 1 eines mit einem automatisierten Stufenschaltgetriebe und einem Abstandsregeltempomaten (ACC-System) ausgerüsteten Kraftfahrzeugs nach Fig. 1 umfasst ein ACC-Steuergerät 2, ein Motorsteuergerät 3, ein Getriebesteuergerät 4, ein Bremssteuergerät 5 einer Dauerbremse, und ein Bremssteuergerät 6 der Betriebsbremse. Einer Auswertungseinheit 7 des ACC-Steuergerätes 2 werden Einstellungsdaten einer ACC-Bedienungseinheit 8 und Sensordaten einer ACC-Sensoreinrichtung 9 zugeleitet. An der ACC-Bedienungseinheit kann der Fahrer eine im Geschwindigkeitsregelmodus des ACC-Systems einzuhaltende Sollgeschwindigkeit v_{Soll} und einen im Abstandsregelmodus des ACC-Systems einzuhaltenden Sollabstand zu einem vorausfahrenden Fahrzeug eingeben.

Die ACC-Sensoreinrichtung 9 weist mindestens einen Radarsensor auf, mittels dem bei eingeschaltetem ACC-System permanent der Bereich vor dem eigenen Kraftfahrzeug überwacht sowie durch eine entsprechende Auswertung der Sensorsignale vorausfahrende Fahrzeuge erkannt und deren Fahrtrichtung, Entfernung und Relativgeschwindigkeit ermittelt wird. Hierzu werden der Auswertungseinheit 7 auch Betriebszustandsdaten zugeleitet, die von Motorsensoren 10, Getriebesensoren 11 und weiteren Sensoren 12 erfasst werden, oder die unmittelbar von anderen Steuergeräten 3, 4, 5, 6 weitergeleitet werden.

Das Ergebnis der Auswertung in der Auswertungseinheit 7 ist eine Sollbeschleunigung bzw. Sollverzögerung a_{Soll}, die einem Längsregler 13 des ACC-Steuergerätes 2 als Eingangsgröße zugeführt wird. In dem Längsregler 13 werden aus der Sollbeschleunigung bzw. Sollverzögerung a_{Soll} Steuerkommandos zur Ansteuerung des Antriebsmotors, des Stufenschaltgetriebes und der Bremseinrichtungen des Kraftfahrzeugs abgeleitet, mit denen die Sollbeschleunigung bzw. Sollverzögerung a_{Soll} erreicht werden soll. Die betreffenden Steuerkommandos des Längsreglers 13 werden daher dem Motorsteuergerät 3 zugeleitet, das neben einer normalen Motorsteuerung 3a auch eine Motorbremssteuerung 3b umfasst. Des weiteren werden die betreffenden Steuerkommandos des Längsreglers auch an das Getriebesteuergerät 4, das Bremssteuergerät 5 der Dauerbremse und das Bremssteuergerät 6 der Betriebsbremse weitergeleitet.

Während der Antriebsmotor, die Motorbremse, die Dauerbremse und die Betriebsbremse jeweils unmittelbar von dem Längsregler 13 des ACC-Steuergerätes 2 angesteuert werden, werden in dem Getriebesteuergerät 4 zumindest in einigen Betriebssituationen, insbesondere bei aktiviertem Abstandsregelmodus des ACC-Systems und bei Vorliegen eines Schubbetriebs (M_{M_Soll} < 0) des Antriebsmotors, die Drehmomentanforderung M_{M_Soll} des Längsreglers 13 an den Antriebsmotor, das Bremsmoment M_{Br_Mot} der Motorbremse, das Bremsmoment M_{Br_Ret} der Dauerbremse und gegebenenfalls das Bremsmoment M_{Br_Rad} der Betriebsbremse zusammen mit weiteren Betriebsparametern ausgewertet und hieraus eine modifizierte Drehmomentanforderung M_{M_mod} zur Steuerung der Schaltvorgänge des Stufenschaltgetriebes ermittelt.

Durch die Schaltsteuerung des Stufenschaltgetriebes mit der modifizierten Drehmomentanforderung M_{M_mod} werden unnötige Schaltungen und die damit verbundenen Nachteile, wie ein erhöhter Kraftstoffverbrauch, ein hoher Verschleiß an den Schaltelementen des Stufenschaltgetriebes und ein schlechter Fahrkomfort vermieden. Zusätzlich können bei dieser Vorgehensweise auch bestimmte Betriebssituationen, wie eine Fahrt bei aktiviertem Geschwindigkeits-oder Abstandsregelmodus im Schubbetrieb in einem Gefälleauslauf und eine Fahrt bei aktiviertem Abstandsregelmodus im Zug- oder Schubbetrieb mit einer Abstandsvergrößerung zu einem vorausfahrenden Fahrzeug erfasst werden, und in diesem Fall jeweils eine Zug- oder Schubhochschaltung durchgeführt werden, um den Kraftstoffverbrauch weiter zu senken und den Fahrkomfort entsprechend zu erhöhen.

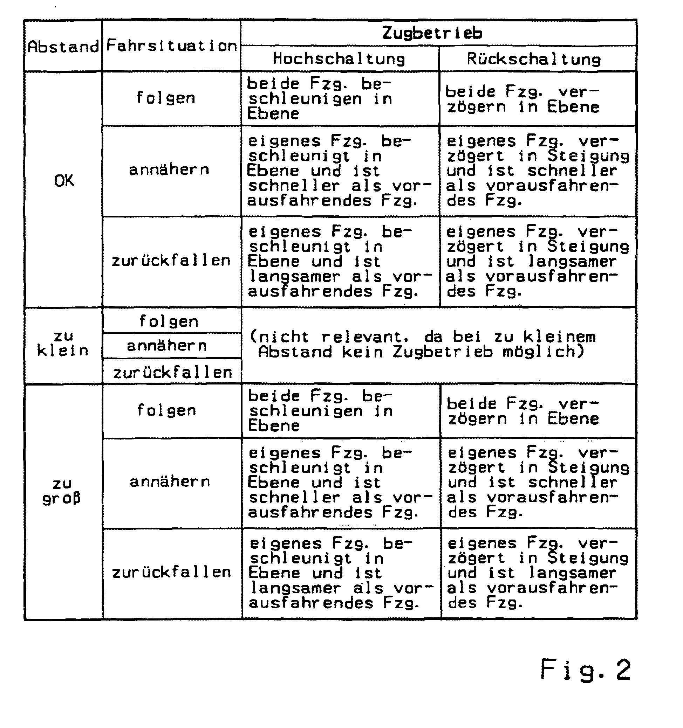

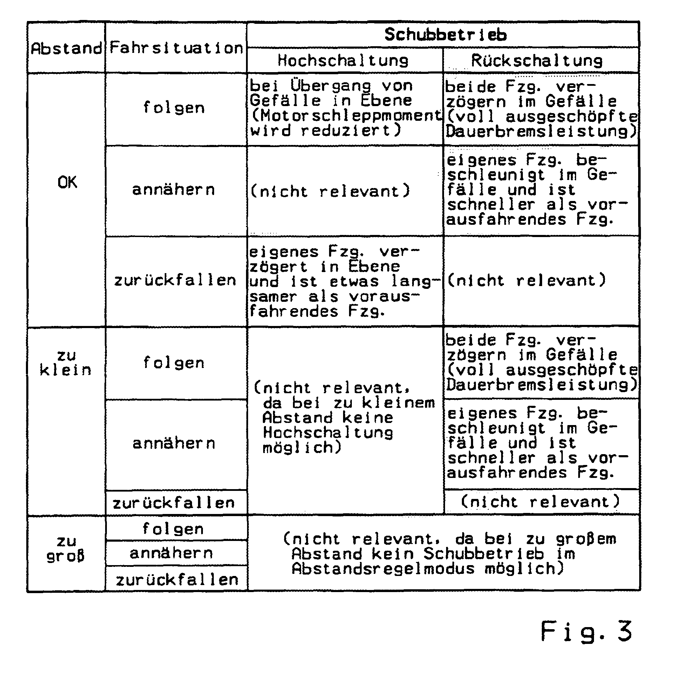

Die bei aktiviertem Abstandsregelmodus des ACC-Systems relevanten Fahrsituationen, wie das einem vorausfahrenden Fahrzeug Folgen, die Annäherung an das vorausfahrende Fahrzeug und das Zurückfallen gegenüber dem vorausfahrenden Fahrzeug, die jeweilige Abstandsentwicklung, wie die Einhaltung des Sollabstands (OK), ein zu kleiner Abstand und ein zu großer Abstand, sowie die dabei erforderlichen oder vorteilhaften Schaltvorgänge sind für einen Zugbetrieb (M_{M_Soll} > 0) des Antriebsmotors in der Tabelle von Fig. 2 und für einen Schubbetrieb (M_{M_Soll} < 0) des Antriebsmotors in der Tabelle von Fig. 3 selbsterklärend zusammengestellt. Sie sind hinsichtlich ihrer Offenbarung als Bestandteil der Beschreibung zu betrachten.

### Bezugszeichen

- 1: Steuerungseinrichtung
- 2: ACC-Steuergerät
- 3: Motorsteuergerät
- 3a: Normale Motorsteuerung
- 3b: Motorbremssteuerung
- 4: Getriebesteuergerät
- 5: Steuergerät der Dauerbremse
- 6: Steuergerät der Betriebsbremse
- 7: Auswertungseinheit
- 8: Bedienungseinheit
- 9: ACC-Sensoreinrichtung
- 10: Motorsensoren
- 11: Getriebesensoren
- 12: Weitere Sensoren
- 13: Längsregler
- a_{Soll}: Sollbeschleunigung, Sollverzögerung
- ACC: Adaptive Cruise Control, Abstandsregeltempomat
- CC: Cruise Control, Tempomat
- F_{Filter}: Filterfunktion
- F₁: Funktion
- F₂: Funktion
- M_{Br}: Bremsmoment
- M_{Br_Mot}: Bremsmoment der Motorbremse
- M_{Br_Rad}: Bremsmoment der Betriebsbremse
- M_{Br_Ret}: Bremsmoment der Dauerbremse
- M_{M}: Drehmoment des Antriebsmotors, Motormoment
- M_{M_Ist}: Istmoment des Antriebsmotors
- M_{M_max}: maximales Drehmoment des Antriebsmotors
- M_{M_mod}: Eingangs-Sollmoment der Getriebesteuerung
- M_{M_Soll}: Eingangs-Sollmoment der Motorsteuerung
- p_{Br}: Bremsdruck
- P_{Br_Rad}: Bremsdruck der Radbremse
- SAE: Society of Automotive Engineers
- t: Zeit
- v: Fahrgeschwindigkeit
- V_{Ist}: Istgeschwindigkeit
- v_{Soll}: Sollgeschwindigkeit
- ΔM: Drehmomentdifferenz
- Δv: Geschwindigkeitsdifferenz

## Patentansprüche

1. Verfahren zur Schaltsteuerung eines automatisierten Stufenschaltgetriebes, das innerhalb eines Antriebsstrangs eines Kraftfahrzeugs, beispielsweise eines Nutzfahrzeugs, im Kraftfluss zwischen einem als Verbrennungsmotor ausgebildeten Antriebsmotor oder einem Hybridantrieb und einem Achsantrieb einer Antriebsachse oder einem Verteilergetriebe angeordnet ist, und dessen Schaltvorgänge in Abhängigkeit von Betriebsparametern sowie von Steuerungseingriffen eines in einem Geschwindigkeitsregelmodus und in einem Abstandsregelmodus betreibbaren Abstandsregeltempomaten (ACC-System) in den Antriebsmotor und in Bremseinrichtungen des Kraftfahrzeugs gesteuert werden, wobei zur Ansteuerung des Stufenschaltgetriebes bei Vorliegen zumindest eines bestimmten Betriebszustands eine von der Drehmomentanforderung (M_{M_Soll}) des ACC-Systems an den Antriebsmotor abweichende Drehmomentanforderung (M_{M_mod}) verwendet wird, **dadurch gekennzeichnet, dass** der momentan aktivierte Betriebsmodus des Abstandsregeltempomaten (ACC-System) und die Lastrichtung der Drehmomentanforderung des ACC-Systems an den Antriebsmotor (M_{M_Soll}) > 0; M_{M_Soll}) < 0) ermittelt werden, und dass die zur Ansteuerung des Stufenschaltgetriebes verwendete Drehmomentanforderung (M_{M_mod}) bei aktiviertem Geschwindigkeits- oder Abstandsregelmodus in Abhängigkeit des Betriebsmodus und der Lastrichtung der Drehmomentanforderung bestimmt wird.

2. Verfahren nach Anspruch 1, **dadurch gekennzeichnet, dass** die zur Ansteuerung des Stufenschaltgetriebes verwendete Drehmomentanforderung (M_{M_mod}) bei aktiviertem Geschwindigkeitsregelmodus im Zugbetrieb (M_{M_soll} > 0) mittels einer Funktion (F₁(Δv)) in Abhängigkeit der Geschwindigkeitsdifferenz (Δv = v_{Soll} - v_{Ist}) zwischen der in dem ACC-System eingestellten Sollgeschwindigkeit (v_{Soll}) und der aktuellen Istgeschwindigkeit (v_{Ist}) des Kraftfahrzeugs bestimmt wird, wobei die Funktion (F₁(Δv)) proportional mit der Geschwindigkeitsdifferenz (Δv) ansteigt.

3. Verfahren nach Anspruch 1 oder 2, **dadurch gekennzeichnet, dass** die zur Ansteuerung des Stufenschaltgetriebes verwendete Drehmomentanforderung (M_{M_mod}) bei aktiviertem Abstandsregelmodus im Zugbetrieb (M_{M_Soll} > 0) aus der mittels einer Filterfunktion (F_{Filter}(t)) zeitlich begrenzt abgeschwächten Drehmomentanforderung (M_{M_soll}) an den Antriebsmotor bestimmt wird (M_{M_mod} = F_{Filter}(t) * M_{M_Soll}).

4. Verfahren nach einem der Ansprüche 1 bis 3, **dadurch gekennzeichnet, dass** die zur Ansteuerung des Stufenschaltgetriebes verwendete Drehmomentanforderung (M_{M_mod}) bei aktiviertem Geschwindigkeits- oder Abstandsregelmodus im Schubbetrieb (M_{M_Soll} < 0) als fiktiver Wunschschub (M_{M_mod} < 0) in Abhängigkeit der Drehmomentanforderung (M_{M_Soll}) an den Antriebsmotor und der betätigten Bremseinrichtungen (M_{Br_Mot} < 0, M_{Br_Ret} < 0, M_{Br_Rad} < 0) bestimmt wird (M_{M_mod} = F₂(M_{M_Soll}, M_{Br_Mot}, M_{Br_Ret}, M_{Br_Rad}).

5. Verfahren nach Anspruch 4, **dadurch gekennzeichnet, dass** bei aktiviertem Geschwindigkeits- oder Abstandsregelmodus im Schubbetrieb (M_{M}__{Soll} < 0) zusätzlich der Steigungswiderstand erfasst und daraus der Gradient des Steigungswiderstands berechnet wird, und dass bei einer Ermittlung eines Gefälleauslaufs eine Schubhochschaltung durchgeführt wird.

6. Verfahren nach einem der Ansprüche 3 bis 5, **dadurch gekennzeichnet, dass** bei aktiviertem Abstandsregelmodus im Zug- oder Schubbetrieb (M_{M_Soll} > 0, M_{M}__{Soll} < 0) zusätzlich der Abstand zu dem vorausfahrenden Fahrzeug erfasst und daraus der Gradient des Abstands berechnet wird, und dass bei einer Ermittlung einer Abstandsvergrößerung (Zurückfallen) eine Zug- oder Schubhochschaltung durchgeführt wird.

7. Verfahren nach einem der Ansprüche 1 bis 6, **dadurch gekennzeichnet, dass** bei aktiviertem Abstandsregelmodus im Schubbetrieb (M_{M_Soll} < 0) eine automatische Betätigung der Betriebsbremse durch das ACC-System zumindest qualitativ sensorisch erfasst wird, und dass bei einer festgestellten Bremsbetätigung die Ermittlung des Fahrwiderstands für die Dauer der Bremsbetätigung unterbrochen wird.

8. Verfahren nach einem der Ansprüche 1 bis 6, **dadurch gekennzeichnet, dass** bei aktiviertem Abstandsregelmodus im Schubbetrieb (M_{M_Soll} < 0) eine automatische Betätigung der Betriebsbremse durch das ACC-System mittels jeweils eines Bremsdrucksensors an jedem der gebremsten Räder sowie ein Solobetrieb oder Anhängerbetrieb erfasst wird, und dass bei erkanntem Solobetrieb das Bremsmoment der Betriebsbremse (M_{Br_ Rad}) aus den Bremsdrücken (p_{Br_Rad} > 0) berechnet und damit der aktuelle Fahrwiderstand berechnet wird, wogegen bei erkanntem Anhängerbetrieb die Ermittlung des Fahrwiderstands für die Dauer der Bremsbetätigung unterbrochen wird.

9. Verfahren nach einem der Ansprüche 1 bis 8, **dadurch gekennzeichnet, dass** zur Steuerung des Stufenschaltgetriebes nur auf Sensor- und Steuerungsdaten zurückgegriffen wird, die im Datenbussystem (SAE J1939) des Antriebsstrangs standardisiert verfügbar sind.

## Claims

1. Method for controlling the shifting of an automated variable speed transmission which is arranged within a drive train of a motor vehicle, for example of a utility vehicle, in the force flux between a drive engine which is embodied as an internal combustion engine, or a hybrid drive and an axle drive of a drive axle or a distributor gear, and the shifting processes of which are controlled as a function of operating parameters and of control interventions of an adaptive cruise control system (ACC system), which can be operated in a speed control mode and in a distance control mode, into the drive engine and into braking devices of the motor vehicle, wherein, in order to actuate the variable speed transmission when at least one specific operating state is present, a torque request (M_{M_mod}) which differs from the torque request (M_{M_Soll}) of the ACC system to the drive engine is used, **characterized in that** the instantaneously activated operating mode of the adaptive cruise control system (ACC system) and the load direction of the torque request of the ACC system to the drive engine (M_{M_Soll} > 0; M_{M_Soll} < 0) are determined, and **in that** the torque request (M_{M_mod}) which is used to actuate the variable speed transmission is determined as a function of the operating mode and the load direction of the torque request when the speed control mode or distance control mode is activated.

2. Method according to Claim 1, **characterized in that** the torque request (M_{M_mod}) which is used to actuate the variable speed transmission in the traction mode (M_{M_Soll} > 0) is determined by a function (F₁(Δv)) in dependence on the speed difference (Δv = v_{Soll} - vᵢₛₜ) between the set point speed (v_{Soll}) set in the ACC system and the current actual speed (vᵢₛₜ) of the motor vehicle, wherein the function (F₁(Δv)) rises in proportion with the speed difference (Δv).

3. Method according to Claim 1 or 2, **characterized in that** the torque request (M_{M_mod}) which is used to actuate the variable speed transmission when the distance control mode is activated in the traction mode (M_{M_Soll} > 0) is determined (M_{M_mod} = F_{Filter} (t) * M_{M_soll}) from the torque request (M_{M_Soll}) to the drive motor, which torque request is attenuated in a chronologically limited fashion by means of a filter function (F_{Filter}(t)).

4. Method according to one of Claims 1 to 3, **characterized in that** the torque request (M_{M_mod}) which is used to actuate the variable speed transmission when the speed control mode or distance control mode is actuated in the overrun mode (M_{M_Soll} < 0) is determined (M_{M_mod} = F2 (M_{M_Soll}, M_{Br_Mot}, M_{Br_Ret}, M_{Br_Rad}) as a virtual desired overrun (M_{M_mod} < 0) as a function of the torque request (M_{M_Soll}) to the drive engine and the actuated braking devices (M_{Br_M}oₜ < 0, M_{Br_Ret} < 0, M_{Br_Rad} < 0).

5. Method according to Claim 4, **characterized in that**, when the speed control mode or distance control mode is activated in the overrun mode (M_{M_Soll} < 0), the climbing resistance is sensed and the gradient of the climbing resistance is calculated therefrom, and **in that** when a downhill slope run-out is detected, a overrun upshift is carried out.

6. Method according to one of Claims 3 to 5, **characterized in that** when a distance control mode is activated in the traction mode or overrun mode (M_{M_Soll} > 0, M_{M_Soll} < 0), the distance from the vehicle travelling in front is additionally sensed and the gradient of the distance is calculated therefrom, and **in that** when an increase in the distance (falling back) is determined, a traction upshift or overrun upshift is carried out.

7. Method according to one of Claims 1 to 6, **characterized in that** when the distance control mode is activated in the overrun mode (M_{M_Soll} < 0), automatic actuation of the service brake is sensed at least in a qualitatively sensory fashion by the ACC system, and **in that** when activation of the brake is detected, the determination of the driving resistance is interrupted for the duration of the actuation of the brake.

8. Method according to one of Claims 1 to 6, **characterized in that** when the distance control mode is activated in the overrun mode (M_{M_Soll} < 0), automatic actuation of the service brake by the ACC system is sensed by means of in each case one brake pressure sensor at each of the braked wheels and a solo mode or trailer mode is sensed, and **in that** when a solo mode is detected, the braking torque of the service brake (M_{Br_Rad}) is calculated from the brake pressures (P_{Br_Rad} >0) and the current driving resistance is therefore calculated, while when the trailer mode is detected, the determination of the driving resistance is interrupted for the duration of the actuation of the brakes.

9. Method according to one of Claims 1 to 8, **characterized in that** for the control of the variable speed transmission recourse is made only to sensor data and control data which are available on the standardized basis in the data bus system (SAE J1939) of the drive train.

## Revendications

1. Procédé de commande du changement de rapport d'une boîte de vitesses à étages automatisée qui est disposée à l'intérieur d'une chaîne de transmission d'un véhicule automobile, par exemple un véhicule utilitaire, dans le flux des forces entre un moteur d'entraînement réalisé sous la forme d'un moteur à combustion interne ou un entraînement hybride et un mécanisme d'entraînement d'essieu d'un essieu moteur ou une boîte de transfert, et dont les opérations de changement de rapport sont commandées en fonction de paramètres opérationnels et d'interventions de commande dans le moteur d'entraînement et dans les dispositifs de freinage du véhicule automobile par un régulateur de vitesse et de distance (système ACC) pouvant fonctionner dans un mode de régulation de la vitesse et dans un mode de régulation de la distance, un couple exigé (M_{M_mod}) différent du couple exigé (M_{M_soll}) du système ACC au moteur d'entraînement étant utilisé pour commander la boîte de vitesses à étages en présence d'au moins un état de fonctionnement prédéfini, **caractérisé en ce que** le mode de fonctionnement momentanément activé du régulateur de vitesse et de distance (système ACC) et le sens de la charge du couple exigé du système ACC au moteur d'entraînement (M_{M_soll} > 0 ; M_{M_soll} < 0) sont déterminés, et **en ce que** le couple exigé (M_{M_mod}) utilisé pour commander la boîte de vitesses à étages lorsque le mode de régulation de la vitesse ou de la distance est activé est déterminé en fonction du mode de fonctionnement et du sens de la charge du couple exigé.

2. Procédé selon la revendication 1, **caractérisé en ce que** le couple exigé (M_{M_mod}) utilisé pour commander la boîte de vitesses à étages lorsque le mode de régulation de la vitesse est activé en mode traction (M_{M_Soll} > 0) est déterminé au moyen d'une fonction (F₁(Δv)) en fonction de la différence de vitesse (Δv = v_{Soll} - vᵢₛₜ) entre la vitesse de consigne (vₛₒₗₗ) réglée dans le système ACC et la vitesse réelle (vᵢₛₜ) actuelle du véhicule automobile, la fonction (F₁(Δv)) croissant proportionnellement à la différence de vitesse (Δv).

3. Procédé selon la revendication 1 ou 2, **caractérisé en ce que** le couple exigé (M_{M_mod}) utilisé pour commander la boîte de vitesses à étages lorsque le mode de régulation de la distance est activé en mode traction (M_{M_soll} > 0) est déterminé à partir du couple exigé (M_{M_Soll}) de la part du moteur d'entraînement, atténué et limité dans le temps au moyen d'une fonction de filtrage (F_{Filter}(t)) (M_{M_mod} = F_{Filte}(t) * M_{M_soll}).

4. Procédé selon l'une des revendications 1 à 3, **caractérisé en ce que** le couple exigé (M_{M_mod}) utilisé pour commander la boîte de vitesses à étages lorsque le mode de régulation de la vitesse ou de la distance est activé en mode de poussée (M_{M_soll} < 0) est déterminé sous la forme d'une poussée souhaitée fictive (M_{M_mod} < 0) en fonction du couple exigé (M_{M_Soll}) de la part du moteur d'entraînement et des dispositifs de freinage actionnés (M_{Br_Mot} < 0, M_{Br_Ret} < 0, M_{Br_Rad} < 0) (M_{M_mod} = F2 (M_{M_Soll}, M_{Br_Mot}, M_{Br_Ret}, M_{Br_Rad}).

5. Procédé selon la revendication 4, **caractérisé en ce que** lorsque le mode de régulation de la vitesse ou de la distance est activé en mode de poussée (M_{M_Soll} < 0), la résistance de pente est en plus détectée et le gradient de la résistance de pente est calculé à partir de celle-ci, et **en ce qu'**un passage au rapport de poussée supérieur est effectué en cas de détermination d'une sortie de pente.

6. Procédé selon l'une des revendications 3 à 5, **caractérisé en ce que** lorsque le mode de régulation de la distance est activé en mode traction ou de poussée (M_{M_soll} > 0, M_{M_Soll} < 0), l'écart par rapport au véhicule qui précède est en plus détecté et le gradient de la distance est calculé à partir de celui-ci, et **en ce qu'**un passage au rapport de traction ou de poussée supérieur est effectué en cas de détermination d'une augmentation de la distance (retombée).

7. Procédé selon l'une des revendications 1 à 6, **caractérisé en ce que** lorsque le mode de régulation de la distance est activé en mode de poussée (M_{M}__{Soll} < 0), un actionnement automatique du frein de service par le système ACC est détecté par détection au moins qualitativement, et **en ce qu'**en présence d'un actionnement du frein constaté, la détermination de la résistance au déplacement est interrompue pendant la durée de l'actionnement du frein.

8. Procédé selon l'une des revendications 1 à 6, **caractérisé en ce que** lorsque le mode de régulation de la distance est activé en mode de poussée (M_{M_Soll} < 0), un actionnement automatique du frein de service par le système ACC est détecté à chaque fois au moyen d'un détecteur de pression de freinage sur chacune des roues freinées ainsi qu'un mode solo ou un mode remorque, et **en ce que** dans le cas de la détection du mode solo, le moment de freinage du frein de service (M_{Br_Rad}) est calculé à partir des pressions de freinage (p_{Br_Rad} > 0) et la résistance au déplacement actuelle est ainsi calculée, alors que dans le cas de la détection du mode remorque, la détermination de la résistance au déplacement est interrompue pendant la durée de l'actionnement du frein.

9. Procédé selon l'une des revendications 1 à 8, **caractérisé en ce que** la commande de la boîte de vitesses à étages s'effectue en ayant recours uniquement à des données de capteur et de commande qui sont disponibles sous forme normalisée dans le système de bus de données (SAE J1939) de la chaîne de transmission.
